Europäisches Patentamt

European Patent Office

Office européen des brevets

(11) Numéro de publication: **0 338 912**

**A1**

(12) # DEMANDE DE BREVET EUROPEEN

(21) Numéro de dépôt: 89401063.6

(51) Int. Cl.⁴: **G 05 D 23/19**

(22) Date de dépôt: 18.04.89

(30) Priorité: 22.04.88 FR 8805384

(43) Date de publication de la demande:
25.10.89 Bulletin 89/43

(84) Etats contractants désignés:
AT BE CH DE ES GB GR IT LI LU NL SE

(71) Demandeur: BARPHONE S.A.
Z.I. Saint-Lambert des Levées Volney
F-49400 Saumur (FR)

SYNFORIC-DEVELOPPEMENT
65, rue de Bercy
F-75012 Paris (FR)

(72) Inventeur: Bourvon, Philippe
Le Bourg Courchamps
F-49260 Montreuil-Bellay (FR)

Goyeau, Olivier
38 rue du Pont Poiroux
F-49160 Longue Jumelles (FR)

Tursan, Georges
Manoir de Grissay
F-49350 Chenehutte (FR)

(74) Mandataire: CABINET BONNET-THIRION
95 Boulevard Beaumarchais
F-75003 Paris (FR)

(54) **Système de gestion centralisée de fournitures, telles que chauffage, à des logements dans un ensemble immobilier.**

(57) Le système comporte un micro-ordinateur (1) central, une source d'alimentation (14), équipée de moyens de secours en cas de défaillance du réseau ; il comporte encore des terminaux (50-53) affectés chacun à un logement d'un ensemble immobilier. Ces terminaux comprennent des entrées (50a) pour des capteurs de température, des sorties (50b) pour des électrovannes sur les circuits de fluide de chauffage, un affichage (50c) et un clavier (50d) pour l'enregistrement de consignes. Le micro-ordinateur (1) est mis en communication séquentielle avec chacun des terminaux, pour déterminer les commandes d'électrovannes en fonction des besoins décelés par les capteurs, en fonction de consignes enregistrées. La mise en communication séquentielle est obtenue à travers un concentrateur principal (2) à trente-deux voies, et des concentrateurs satellites (3, 4). Les concentrateurs (2, 3, 4) fournissent aux terminaux (50-53) l'énergie nécessaire à leur fonctionnement, à partir de leurs sources propres (14, 32, 42). L'utilisation de concentrateurs satellites (3, 4) donne au système une configuration très souple, permettant une réduction de la longueur des lignes et de l'importance des faisceaux. Le système permet la gestion accessoire de services et d'alertes.

FIG.1

FIG.3

EP 0 338 912 A1

## Description

**Système de gestion centralisée de fournitures, telles que chauffage, à des logements dans un ensemble immobilier**

L'invention se rapporte à un système pour la gestion centralisée de fournitures matérielles, telles qu'énergie de chauffage, à une multiplicité de logements dans un ensemble immobilier collectif, comportant un micro-ordinateur central de gestion, dans chaque logement un terminal pour moduler suivant les besoins les flux de fourniture, et un réseau de liaison des terminaux au micro-ordinateur avec des moyens de concentration aptes à mettre séquentiellement chacun des terminaux en communication bilatérale avec le micro-ordinateur.

Dans le cadre de ce que l'on appelle la "Domotique", ou informatique appliquée à la gestion des fournitures et services liés au logement domestique, on a développé des appareillages pour le pilotage des installations consommatrices d'énergie en vue d'assurer un confort excellent conjointement avec des dépenses d'énergie minimales. Ces appareillages peuvent permettre notamment de régler la température des pièces d'une habitation individuellement selon l'heure de la journée et la destination de la pièce.

Dans les ensembles immobiliers collectifs, l'énergie de chauffage est fournie à la multiplicité de logements à partir de chaufferies centrales, pour des raisons économiques évidentes. Mais alors les fournitures de chauffage sont déterminées globalement, pour un logement moyen ; même si des réglages locaux sont possibles, il y a généralement des pièces surchauffées et d'autres insuffisamment chauffées. En outre la modulation du chauffage suivant l'heure de la journée et l'affectation des pièces, et notamment la mise en veilleuse du chauffage des pièces inoccupées n'est pratiquement pas possible. Enfin la répartition des charges de chauffage se fait nécessairement sur une base forfaitaire, ce qui est psychologiquement indésirable, et source de gaspillages, chacun voulant en avoir "pour son argent".

On a donc proposé de régler la gestion du chauffage de façon centralisée, en disposant un micro-ordinateur central, des terminaux dans chaque logement, et un réseau pour la mise en communication séquentielle de chacun des terminaux avec le micro-ordinateur central. Le terminal individuel sera relié à des capteurs de température, et à des moyens de commande du flux d'énergie de chauffage, tels des électrovannes. Chaque fois que le terminal sera en communication avec le micro-ordinateur central, il transmettra au micro-ordinateur des signaux représentatifs des indications des capteurs ; le micro-ordinateur en fonction de consignes générales et de consignes particulières au logement, déterminera à quelles pièces il convient de fournir du chauffage, enverra des signaux de commande appropriés au terminal qui les dirigera sur les moyens de commande de flux d'énergie, déterminera en conséquence la consommation d'énergie du logement et calculera les charges correspondantes à facturer.

Il va de soi que la réalisation d'un réseau de transmission avec un micro-ordinateur central et des terminaux pour chaque logement permettra une circulation d'informations, et une gestion de services offerts aux titulaires de logements, susceptibles d'améliorer la rentabilité du réseau.

Lorsque l'ensemble immobilier regroupe un grand nombre de logements, disons quelques centaines par exemple, la transmission par une paire de conducteurs de chaque terminal à un concentrateur associé au micro-ordinateur va exiger la mise en place de quantités considérables de conducteurs, avec des artères ou faisceaux encombrants dans les zones proches du micro-ordinateur, tandis que les paires de liaison correspondant aux logements les plus éloignés du micro-ordinateur auront des longueurs telles que l'atténuation des signaux risque d'être excessive.

Pour pallier ces inconvénients, l'invention propose un système pour la gestion centralisée de fournitures matérielles telles qu'énergie de chauffage, à une multiplicité de logements dans un ensemble immobilier collectif, comportant un micro-ordinateur central de gestion, dans chaque logement un terminal pour moduler suivant les besoins les flux de fourniture, et un réseau de liaison des terminaux au micro-ordinateur avec des moyens de concentration aptes à mettre sequentiellement chacun des terminaux en communication bilatérale avec le micro-ordinateur, caractérisé en ce que les moyens de concentration comportent un concentrateur principal couplé au micro-ordinateur avec une pluralité de connexions de lignes de liaison vers les terminaux, et au moins un concentrateur satellite intercalé entre une ligne de liaison venant du concentrateur principal et un groupe de lignes de liaison vers les terminaux.

L'utilisation de concentrateurs satellites permet un regroupement des liaisons en harmonie avec la distribution topographique des logements (regroupement par groupes d'étages donnant sur une même cage d'escalier, éventuellement regroupement par bâtiments). Par ailleurs, les mises en communication des terminaux avec le micro-ordinateur étant effectuées une par une en séquence, le regroupement des liaisons par les concentrateurs satellites permet un écoulement série des informations.

Cette structure est avantageuse en outre car il est alors possible de doter les concentrateurs, principal et satellite, d'une source d'alimentation propre, branchée sur le réseau et équipée de moyens de secours, et d'alimenter les terminaux en énergie à partir de cette source à travers la paire de liaisons, tandis que la transmission bilatérale des signaux vers le micro-ordinateur s'effectuera à travers une coupure galvanique. Cette disposition évite d'avoir à équiper les terminaux de source propre munie de moyens de secours pour pallier les coupures de secteur. Outre que des sources de ce genre sont relativement onéreuses et demandant une surveillance d'entretien, de sorte que leur multiplication n'est pas souhaitable, il ne conviendrait pas qu'un terminal soit inopérant pour la simple raison que les occupants du logement correspondant se sont absentés pour une certaine période, et ont, par précaution, ouvert leur disjoncteur particulier. Par ailleurs, on comprendra que les sorties d'un concentrateur pouvant être branchées soit sur un terminal, soit sur un concentrateur satellite, l'entrée du concentrateur satellite doit être isolée galvaniquement de la ligne, pour éviter des interactions entre sources d'alimentation de concentrateurs en cascade.

Parmi les services qui peuvent être proposés par le réseau de gestion figurent des surveillances, telles que des alarmes de sinistres (incendie, inondation) ou d'intrusion. Dans les ensembles immobiliers à grand nombre de logements, il va s'écouler un intervalle de temps qui pourra atteindre plusieurs minutes entre deux mises en communication successives d'un même terminal avec le micro-ordinateur. Alors que ce délai est acceptable en des circonstances normales, il serait prohibitif pour des alarmes. Les dégâts causés par des sinistres croissent presque exponentiellement avec le retard d'intervention ; en cas d'intrusion, l'intervalle entre deux mises en communication pourrait être suffisant pour une neutralisation des dispositifs d'alarme. Selon une disposition de l'invention, les terminaux et au moins les concentrateurs satellites comportent des détecteurs d'incident en réponse à quoi ces terminaux et concentrateurs émettent des signaux d'alerte non corrélés avec la séquence de mises en communication des terminaux avec le micro-ordinateur, et les concentrateurs sont aptes à tout moment à répondre aux signaux d'alerte en bloquant la séquence et en faisant apparaître le signaux d'alerte sur une connexion de ligne venant du micro-ordinateur central. Ainsi les signaux d'alerte passent en priorité vers le micro-ordinateur.

De façon préférée, les concentrateurs possèdent deux multiplexeurs, un premier pour l'émission de signaux vers les terminaux, et l'autre pour la réception des signaux formés par ces terminaux, et un comparateur sensible à la différence entre la somme des signaux à l'entrée du second multiplexeur, et les signaux en sortie de ce multiplexeur ; la sortie de ce comparateur est reliée à la connexion de ligne venant du micro-ordinateur.

On conçoit que, les signaux normaux issus d'un terminal étant émis en réponse à la mise en communication séquentielle, les signaux présents sur les entrées du second multiplexeur ne diffèrent des signaux sur la sortie de ce multiplexeur que par la présence des signaux d'alerte éventuels, qui vont donc se retrouver en sortie de comparateur et franchir directement, par ce processus, les concentrateurs intercalés.

Des caractéristiques secondaires et les avantages de l'invention ressortiront d'ailleurs de la description qui va suivre à titre d'exemple, en référence aux dessins annexés dans lesquels :

la figure 1 est une représentation schématique d'un système selon l'invention ;

la figure 2 est un schéma de la disposition d'un concentrateur satellite ;

la figure 3 est un schéma d'une connexion entre une sortie de concentrateur et un terminal.

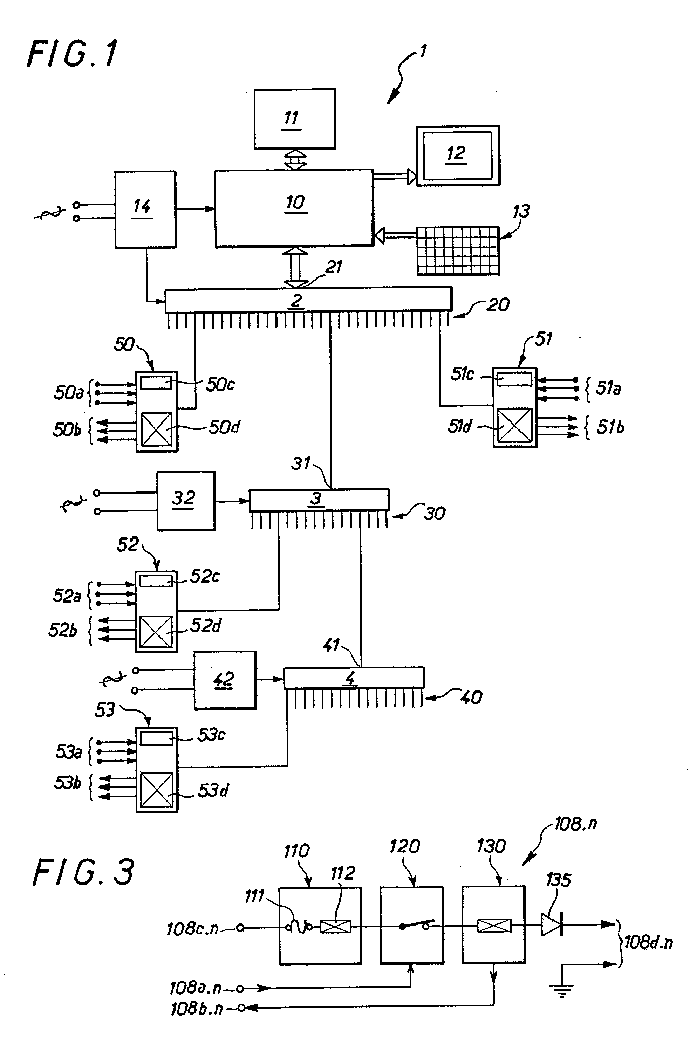

Selon la forme de réalisation choisie et représentée figure 1, le système selon l'invention comprend un micro-ordinateur 1 dans son ensemble, de structure en soi classique avec une unité centrale 10 avec ses mémoires de travail et de programme, une mémoire de masse 11 du type à disque dur, un écran de visualisation 12, un clavier de commande 13, et une source d'alimentation 14. Cette source d'alimentation est branchée sur le réseau, et comporte en outre des moyens de secours avec une batterie d'accumulateurs avec son chargeur, et des dispositifs de commutation pour substituer la batterie au réseau défaillant. Ces moyens de secours sont prévus pour assurer une pleine autonomie de quelques heures au micro-ordinateur, indépendamment de dispositions de sauvegarde pour le contenu des mémoires notamment.

La source 14 assure également l'alimentation d'un concentrateur principal 2, qui comporte une connexion de liaison 21 avec le micro-ordinateur 1, et trente-deux connexions 20 pour des liaisons vers des terminaux tels que 50 et 51 directement, à travers un concentrateur satellite 3, avec directement des terminaux tels que 52, et à travers un deuxième concentrateur satellite 4, vers des terminaux tels que 53.

Les terminaux 50, 51, 52 et 53 présentent des groupes respectifs d'entrées 50a, 51a, 52a, 53a, qui sont reliées à des capteurs, tels que des capteurs de température, des groupes respectifs de sorties 50b, 51b, 52b, 53b qui seront reliées à des organes de commande, telles des électrovannes intercalées dans les circuits de chauffage, des afficheurs 50c, 51c, 52c, 53c où apparaîtront des informations, telles par exemple que l'heure, les valeurs de consigne inscrites aux claviers 50d, 51d, 52d, 53d, ou, sur demande, la valeur actuelle des charges correspondant aux fournitures de chauffage, par exemple.

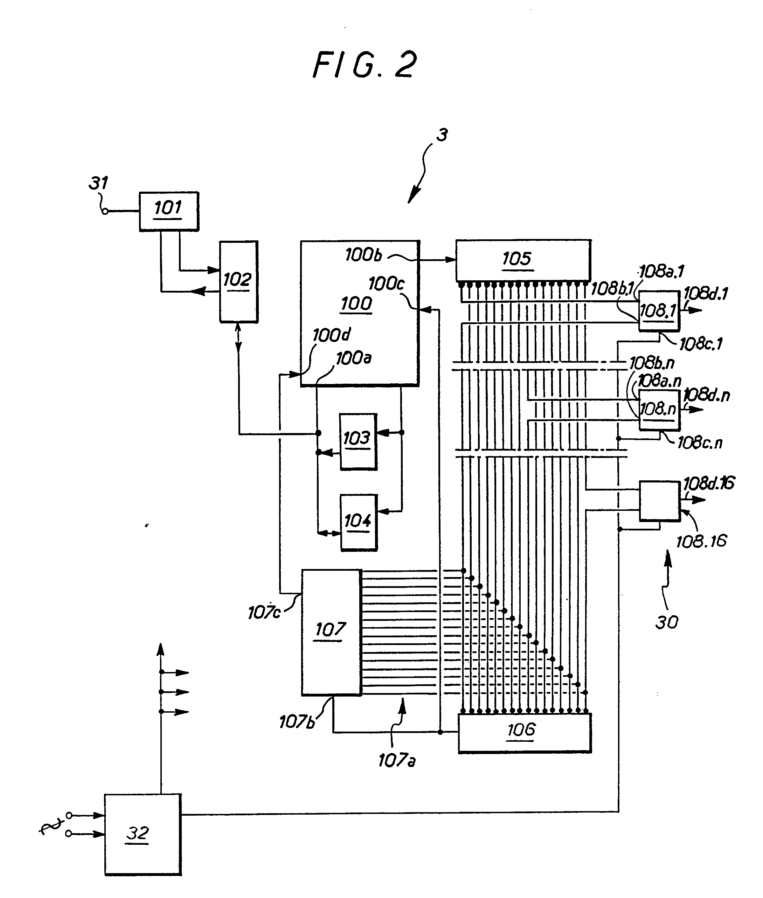

Il n'y a guère à s'étendre sur la description de ces terminaux, qui sont assez classiques dans leur conception. On notera toutefois que, comme il sera décrit plus loin en référence aux figures 2 et 3, ces terminaux sont alimentés en énergie électrique par le concentrateur 2, 3 ou 4 auquel ils sont reliés directement, à travers les lignes de liaison où passent les signaux.

On aura compris que les connexions de liaison 20 du concentrateur principal 2 peuvent être reliées indifféremment à des terminaux tels que 50 et 51, ou à des concentrateurs satellites tels que 3, certaines connexions pouvant rester inutilisées.

Les concentrateurs satellites 3 et 4 présentent seize connexions 30 et 40 pour des liaisons en direction de terminaux directement ou indirectement, et une connexion 31, 41 respectivement pour les liaisons vers le micro-ordinateur.

Les concentrateurs satellites 3 et 4 possèdent respectivement des sources d'alimentation propres 32 et 42, équipées de moyens de secours, batteries et commutateurs, pour pallier d'éventuelles défaillances du réseau, de façon analogue à ce qui a été évoqué pour la source d'alimentation 14.

La répartition des connexions 20, 30 et 40 des concentrateurs 2, 3 et 4, entre terminaux et concentrateurs satellites, est une question d'opportunité, en conjonction avec la répartition de la multiplicité de logements dans l'ensemble immobilier collectif. Dans certains cas, on limitera à un étage la répartition des concentrateurs satellites tels que 3 ; dans d'autres on multipliera les étages 3, 4... En outre, on pourra relier les terminaux de préférence aux derniers étages de concentrateurs, ou on reliera des terminaux à tous les étages.

Les différents concentrateurs sont pilotés, à partir du microprocesseur, de fa on gue tous les terminaux soient mis séquentiellement, un à un, en communication avec le microprocesseur. D'une façon générale, la fin d'une communication avec un terminal provoque le passage du concentrateur directement en liaison avec ce terminal à la communication suivante. Par ailleurs, dans une liaison de concentrateur satellite à concentrateur en aval vers le microprocesseur, c'est la fin d'un cycle du concentrateur amont qui autorise le passage à la connexion suivante sur le concentrateur aval.

En se reportant à la figure 2, un concentrateur satellite, 3 dans son ensemble, comporte un microprocesseur 100, une mémoire à accès adressé 104 et une mémoire morte 103.

La liaison dans la direction du microprocesseur sur la ligne 31 s'effectue à travers un moyen de connexion à coupure galvanique 101 comprenant deux photo-coupleurs, un pour l'émission et un pour la réception, et une interface asynchrone 102 reliée à l'entrée-sortie omnibus 100a du microprocesseur 100. L'interface asynchrone 102 comprend un tampon, de sorte que les signaux entrant ou sortant du côté du microprocesseur 100 soient soumis au rythme de celui-ci, tandis que les signaux venant ou allant au moyen de coupure galvanique 101 soient soumis au rythme de l'appareillage aval (concentrateur satellite ou concentrateur principal).

Le concentrateur satellite 3 comporte une source d'alimentation 32, reliée au réseau électrique, et qui comprend des moyens de secours, avec une batterie d'accumulateur, un chargeur, et des relais voltmétriques tels qu'une défaillance du réseau provoque la commutation sur la batterie, avant que les tensions distribuées à l'appareillage aient disparu. La disposition est classique, et l'autonomie du concentrateur 3 est de quelques heures.

Le concentrateur satellite comporte essentiellement deux multiplexeurs 105 et 106, à seize voies, le premier multiplexeur 105 étant affecté à l'émission et le second 106 étant affecté à la réception. Chacune des voies de l'un et l'autre multiplexeurs 105 et 106 est reliée à une connexion de télétransmission 101.1 à 108.n... 108.16 dans le groupe 30, pour la liaison (directe ou indirecte) à des terminaux (51 à 53, figure 1).

Le microprocesseur 100 est relié par une sortie 100b au premier multiplexeur 105, et par une entrée 100c au second multiplexeur 106.

On a déjà évoqué la transmission prioritaire de signaux d'alerte, émis par un terminal sans cohérence avec la mise en communication séquentielle. A cette fin, le concentrateur 3 comporte un comparateur 107, avec un groupe 107a de seize entrées reliées une à une aux entrées du second multiplexeur, une entrée 107b reliée à la sortie de ce second multiplexeur, et donc à l'entrée 100c du microprocesseur 100. Ce comparateur 107 fait apparaître sur une sortie 107c des signaux différence entre la somme des signaux sur le groupe des entrées 107a et les signaux sur l'entrée 107b. Comme la somme des signaux sur les entrées 107a correspond à la somme des signaux corrélés et non corrélés avec la mise en communication séquentielle, tandis que sur l'entrée 107b apparaissent les seuls signaux corrélés, la différence correspond aux signaux d'alerte. Ceux-ci sont envoyés sur l'entrée 100d du microprocesseur 100 qui engendre une interruption de la mise en communication séquentielle, et l'émission des signaux d'alerte vers le microprocesseur.

Les connexions de télétransmission 108.1 à 108.16 sont représentées plus en détail figure 3, pour la connexion 108.n.

La tension d'alimentation fournie par la source 32 (figure 2) est appliquée à une borne 108c.n. La connexion 108.n comprend un premier étage 110 comprenant en série un fusible 111 et une résistance 112, puis un étage d'émission 120, attaqué à partir d'une entree 108a.n par des signaux issus du premier multiplexeur (105, figure 2). L'étage d'émission 120 comprend un moyen interrupteur série, ouvert par les signaux positifs. L'étage d'émission 120 est suivi d'un étage de réception 130, qui comporte une résistance série, dont la tension aux bornes est envoyée sur une ligne 108b.n en direction d'une entrée n du second multiplexeur (106, figure 2). En sortie de l'étage de réception 130 est disposée une diode de séparation 135, dont la cathode est reliée à une sortie 108d.n pour la liaison avec un terminal (50-53).

Le terminal branché sur la sortie 108d.n va donc recevoir en permanence la tension d'alimentation venant de la source 32 (figure 2), sauf lors de l'émission de signaux par coupure de l'étage d'émission. Bien entendu, le terminal comporte une capacité pour assurer la distribution des tensions d'alimentation malgré les coupures correspondant à l'émission de signaux. Par ailleurs, le terminal émet des signaux par fermeture de la ligne 108d.n sur une résistance. L'appel de courant correspondant sera décelé par l'apparition, aux bornes de la résistance de l'étage de réception 130, d'une différence de potentiel significative, différant de celle qui correspond au courant d'alimentation du terminal. La différence de potentiel aux bornes de la résistance de l'étage 130, convenablement amplifiée et recalée par rapport à la masse, est envoyée sur la ligne 108b.n.

Le concentrateur principal 2 présente une structure analogue à celle du concentrateur satellite 3 qui vient d'être décrit, à l'exception du nombre de connexions de liaison (trente-deux au lieu de seize dans l'exemple décrit), et de ce que ce concentrateur principal partage avec le micro-ordinateur 1 la source d'alimentation 14, pourvue de moyens de secours.

Bien entendu, l'invention n'est pas limitée aux exemples décrits, mais en embrasse toutes les variantes d'exécution.

Ainsi les concentrateurs 2, 3 ou 4 peuvent présenter des connexions de liaison vers les terminaux en nombres différents de ceux qui ont été décrits. Ce nombre sera généralement une puissance de deux, pour des raisons évidentes.

La structure du système dit arborescente par image peut, comme on l'a déjà évoqué, soit comporter un nombre réduit d'étages de concentrateurs (avec un concentrateur principal à trente-deux sorties, et un étage de trente-deux concentrateurs satellites à seize positions, on peut desservir 512 terminaux), soit multiplier les étages. Ce seront des considérations techniques (longueurs de liaison, dispositions des bâtiments) et économiques (prix comparés des lignes et des concentrateurs) qui conduiront à fixer la structure du réseau.

Sous un autre aspect, les services annexes qui pourront être gérés de façon centralisée, en profitant de la structure du système installé pour la gestion de fournitures matérielles sont en dehors de la présente invention, même si la rentabilité d'exploitation du système est améliorée par ces services.

Enfin la programmation du micro-ordinateur ainsi que celles des concentrateurs et terminaux sont en dehors du cadre de la présente invention, et ne demandent pas de description particulière, un informaticien pouvant trouver dans ses connaissances propres, et dans l'état de la technique suffisamment d'informations pour pouvoir mettre en oeuvre la présente invention.

## Revendications

1. Système pour la gestion centralisée de fournitures matérielles telles qu'énergie de chauffage, à une multiplicité de logements dans un ensemble immobilier collectif, comportant un micro-ordinateur central (1) de gestion, dans chaque logement un terminal (50-53) pour moduler suivant les besoins les flux de fourniture, et un réseau de liaison des terminaux au micro-ordinateur avec des moyens de concentration (2, 3, 4) aptes à mettre séquentiellement chacun des terminaux (50-53) en communication bilatérale avec le micro-ordinateur (1), caractérisé en ce que les moyens de concentration comportent un concentrateur principal (2) couplé au micro-ordinateur (1) avec une pluralité de connexions de lignes de liaison (20) vers les terminaux, et au moins un concentrateur satellite (3, 4) intercalé entre une ligne de liaison venant du concentrateur principal (2) et un groupe de lignes de liaison vers les terminaux (52-53).

2. Système selon la revendication 1, caractérisé en ce que les concentrateurs, principal (2) et satellites (3, 4), comportent chacun une source d'alimentation propre (14, 32, 42) branchée sur le réseau et équipée de moyens de secours, cette source étant couplée aux connexions de lignes (30) vers les terminaux (50-53) en sorte de leur fournir de l'énergie pour leur fonctionnement, et en ce qu'au moins les concentrateurs satellites (3, 4) comportent chacun, dans une connexion de ligne (30) venant du concentrateur principal (2), un moyen de coupure galvanique (101).

3. Système selon la revendication 2, caractérisé en ce que ledit moyen de coupure galvanique (101) comporte une paire de photocoupleurs, un pour chaque sens de transmission.

4. Système selon une quelconque des revendications 1 à 3, caractérisé en ce que les terminaux (50-53) et au moins les concentrateurs satellites (3,4) comportent des détecteurs d'incidents en réponse à quoi ces terminaux (50-53) et concentrateurs (3, 4) émettent des signaux d'alerte non corrélés avec la séquence de mises en communication des terminaux (50-53) avec ledit micro-ordinateur central (1), et en ce que les concentrateurs (2, 3, 4) sont aptes à tout moment à répondre auxdits signaux d'alerte apparaissant sur une quelconque des connexions de ligne (30) vers les terminaux (50-53) en bloquant la séquence de mises en communication et faisant apparaître les signaux d'alerte sur une connexion de ligne (101) du côté du micro-ordinateur central (1).

5. Système selon la revendication 4, caractérisé en ce que les concentrateurs (3, 4) comportent une paire de multiplexeurs (105, 106), un premier (105) pour des signaux vers les terminaux (50-53) et le second (106) pour des signaux vers le micro-ordinateur central (1), et un comparateur (107) sensible à la différence entre la somme des signaux à l'entrée du second multiplexeur (106) et les signaux en sortie de ce second multiplexeur, les signaux de sortie du comparateur (107) étant délivrés sur ladite connexion de ligne (101) venant du micro-ordinateur central.

FIG.1

FIG.3

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | WO-A-8400624 (JOHNSON SERVICE CO.)<br>* page 18, ligne 33 - page 33, ligne 10; figures 1-14 * | 1 | G05D23/19 |
| A | | 2-5 | |
| Y | US-A-4661914 (MULOKEY ET AL.)<br>* colonne 3, ligne 40 - colonne 5, ligne 15; figures 1-3 * | 1 | |
| Y | NL-A-8601847 (J.A.BRAND)<br>* revendications 1-19; figures 1, 2 * | 1 | |
| A | | 5 | |
| Y | EP-A-0003010 (UNITED TECHNOLOGIES CORP.)<br>* page 19, ligne 28 - page 23, ligne 13; figures 1, 2 * | 1 | |
| Y | EP-A-143993 (RAKENNUSVALMISTE OY)<br>* page 3, ligne 24 - page 7, ligne 20; figure 1 * | 1 | |

**DOMAINES TECHNIQUES RECHERCHES (Int. Cl.4 )**

G05D

Le présent rapport a été établi pour toutes les revendications

| Lieu de la recherche | Date d'achèvement de la recherche | Examinateur |
|---|---|---|
| LA HAYE | 13 JUIN 1989 | FOURRICHON P.M.L. |